# EUROPEAN PATENT APPLICATION

(11) **EP 4 535 589 A1**
(43) Date of publication of application: **09.04.2025**
(21) Application number: 23816111.1
(22) Date of filing: 31.05.2023
(51) Int. Cl.: H02J 3/00, G06Q 50/06, H02J 3/14, H02J 3/38

(54) **CONTROL SYSTEM, CONTROL METHOD, PROGRAM, AND INTERCONNECTION SYSTEM**

(30) Priority: 03.06.2022 JP 2022091099
(71) Applicant: PANASONIC INTELLECTUAL PROPERTY MANAGEMENT CO., LTD., Kadoma-shi, Osaka 571-0057 (JP)
(72) Inventor: SHINOZAKI, Satoshi, Osaka 571-0057 (JP); BABA, Akira, Osaka 571-0057 (JP)
(74) Representative: Müller-Boré & Partner Patentanwälte PartG mbB
(86) International application number: PCT/JP2023/020291
(87) International publication number: WO 2023/234354

(57) **Abstract**

An object of the present disclosure is to control a load to obtain an increased profit by a sale of electric power via a power generation system and a sale of electric power via a grid power system. A control system (1) includes a load control unit (163) and a decision unit (162). The load control unit (163) is configured to control a load (e.g., electrical water heater) disposed in a facility. The decision unit (162) is configured to decide on an operation period of the load. The decision unit (162) is configured to decide on an operation period during which a sum of a first profit from a sale of electric power transmitted from a power generation system disposed in the facility and a second profit from a sale of electric power transmitted from a grid power system is maximum. The load control unit (163) is configured to control the load such that the load operates during the operation period decided on by the decision unit (162).

## Description

### Technical Field

The present disclosure generally relates to control systems, control methods, programs, and interconnection systems and specifically relates to a control system, a control method, a program, and an interconnection system which control a load.

### Background Art

Conventionally, a device (a control system) which controls a household appliance (load) disposed in a consumer facility (a facility) is known (see Patent Literature 1).

Patent Literature 1 describes a household appliance control device configured to control a household appliance in accordance with a variable electricity rate without hampering convenience. The household appliance control device described in Patent Literature 1 includes: a controller configured to decide on, based on an electricity tariff table, a reduction time zone in which power consumption by the household appliance should be reduced; and a command generator configured to generate a control command for controlling operation for reducing the power consumption by the household appliance in the reduction time zone and transmit the control command thus generated to the household appliance.

### Citation List

### Patent Literature

Patent Literature 1: JP 2011-142753 A

### Summary of Invention

Incidentally, a service is recently available by using which a user of a facility purchases electric power of a power generation system disposed in the facility and uses the electric power for a load in the facility. This service requires an increased profit from a sale of electric power via the power generation system and a sale of electric power via a system for transmitting grid power (a grid power system) while allowing the user of the facility to use the electric power of the power generation system.

In view of the foregoing, it is an object of the present disclosure to provide a control system, a control method, a program, and an interconnection system which are configured to control a load to obtain an increased profit from a sale of electric power via a power generation system and a sale of electric power via a grid power system.

A control system according to an aspect of the present disclosure includes a load control unit and a decision unit. The load control unit is configured to control a load disposed in a facility. The decision unit is configured to decide on an operation period of the load. The decision unit is configured to decide on an operation period during which a sum of a first profit from a sale of electric power transmitted from a power generation system disposed in the facility and a second profit from a sale of electric power transmitted from a grid power system is maximum. The load control unit is configured to control the load such that the load operates during the operation period decided on by the decision unit.

A control method according to an aspect of the present disclosure includes a load control step and a decision step. The load control step includes controlling a load disposed in a facility. The decision step includes deciding on an operation period of the load. The decision step includes deciding on an operation period during which a sum of a first profit from a sale of electric power transmitted from a power generation system disposed in the facility and a second profit from a sale of electric power transmitted from a grid power system is maximum. The load control step includes controlling the load such that the load operates during the operation period decided in the decision step.

A program according to an aspect of the present disclosure is a program for causing a computer system to execute the control method.

An interconnection system according to an aspect of the present disclosure includes the control system and the power generation system.

### Brief Description of Drawings

FIG. 1 is a system configuration diagram of a configuration of an interconnection system including a control system according to an embodiment;
FIG. 2 is a block diagram of a configuration of the control system;
FIG. 3 is a graph of a relationship of electric power used in a facility and electric power generated by a power generation system with respect to time when an electrical water heater controlled by the control system operates during a predetermined period at nighttime;
FIG. 4 is a graph of a relationship of electric power used in a facility and electric power generated by a power generation system with respect to time when the electrical water heater controlled by the control system operates during another time period as an alternative to at least part of the predetermined period;
FIG. 5 is a flowchart of steps in a process performed by the control system and relating to a decision on an operation period of a load; and
FIG. 6 is a flowchart of steps in a process performed by the control system and relating to control of the load.

### Description of Embodiments

The embodiment and variations described below are mere examples of the present disclosure, and the present disclosure is not limited to the embodiment and variations. Various modifications may be made to embodiments other than the embodiment and variations below depending on design and the like within the scope of the technical idea of the present disclosure.

### (Embodiment)

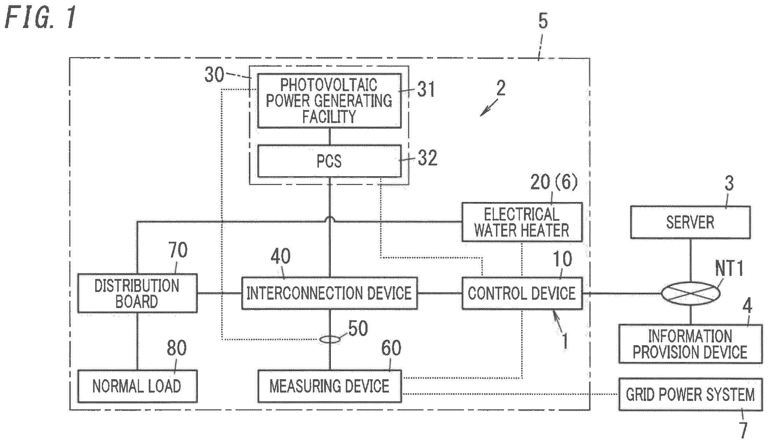

A control system 1 according to the present embodiment will be described below with reference to FIGS. 1 to 6.

### (1) Overview

The control system 1 according to the present embodiment is disposed in a facility 5 (see FIG. 1). The control system 1 controls operation of a load 6 (in this embodiment, an electrical water heater 20) disposed in the facility 5. Examples of the "facility" as used in the present disclosure include: non-dwelling house facilities such as business establishments, factories, buildings, retail establishments, offices, schools, welfare facilities, and hospitals; and dwelling house facilities such as single-family houses, multi-family residential buildings, or individual dwelling units of the multi-family residential buildings. Examples of the non-dwelling house facility include theaters, movie theaters, public assembly halls, recreation halls, complex facilities, restaurants, department stores, hotel, inns, kindergartens, libraries, museums, art museums, underground malls, stations, and airports. Further, examples of the "facility" as used in the present disclosure include outdoor facilities such as ballparks, gardens, parking lots, fields, and parks.

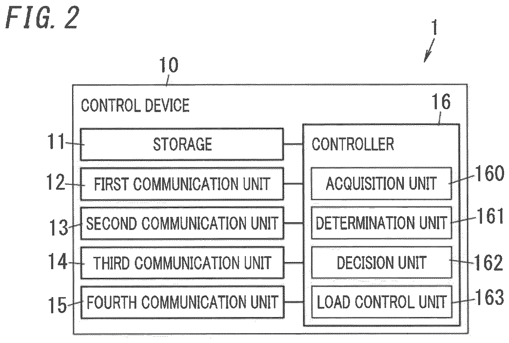

As shown in FIG. 2, the control system 1 according to the present embodiment includes a load control unit 163 and a decision unit 162. The load control unit 163 controls the load 6 (see FIG. 1) disposed in the facility 5 (see FIG. 1). The decision unit 162 decides on an operation period of the load 6. The decision unit 162 decides on an operation period during which the sum of a first profit from a sale of electric power transmitted from a power generation system 30 disposed in the facility 5 and a second profit from a sale of electric power transmitted from a grid power system 7 is maximum. The load control unit 163 controls the load 6 such that the load 6 operates during the operation period decided on by the decision unit 162. In this embodiment, the grid power system 7 is a system which transmits electric power to the facility 5. Moreover, the load 6 is, for example, an electrical water heater 20.

With this configuration, the control system 1 controls the load 6 (the electrical water heater 20) such that the load 6 operates during the operation period, during which the sum of the first profit and the second profit is maximum. That is, controlling the load 6 enables an increased profit to be obtained by the sale of the electric power via the power generation system 30 and the sale of the electric power via the grid power system 7. More specifically, while a user of the facility 5 is allowed to use the electric power of the power generation system 30, an increased profit is obtainable from the sale of the electric power via the power generation system 30 and the sale of the electric power via the grid power system 7.

### (2) Configuration

Configurations of the control system 1 according to the present embodiment and an interconnection system 2 including the control system 1 will be described below.

As shown in FIG. 1, the interconnection system 2 includes a control device 10 as the control system 1, the electrical water heater 20 as the load 6, the power generation system 30, an interconnection device 40, a sensor 50, and a measuring device 60. Moreover, in the facility 5, a distribution board 70 and a load (hereinafter referred to as a normal load 80) different from the electrical water heater 20 are disposed. The normal load 80 is, for example, an electric appliance such as an illumination apparatus or an air conditioning apparatus.

The control device 10, the power generation system 30, the interconnection device 40, and the sensor 50 are owned by a power purchase agreement (PPA) business operator which provides a PPA service. The PPA business operator installs, based on a contract with a user of the facility 5 by the PPA service, the control device 10, the power generation system 30, the interconnection device 40, and the sensor 50 in the facility 5, and sells electric power generated by the power generation system 30 to the user of the facility 5 on a priority basis. That is, the PPA business operator allows, based on the contract with the user of the facility by the PPA service, the user of the facility 5 to use the electric power generated by the power generation system 30 on a priority basis.

The electrical water heater 20 is owned by the user of the facility 5. The user of the facility 5 uses the electric power purchased from the PPA business operator and electric power purchased from an electric power retail business operator to cause the electrical water heater 20 and the normal load 80 to operate. That is, the user of the facility 5 uses the electric power delivered from the power generation system 30 and the electric power delivered from the grid power system 7 used when the electric power retail business operator supplies the electric power, thereby causing the electrical water heater 20 and the normal load 80 to operate. In this embodiment, the PPA business operator and the electric power retail business operator belong to an identical business group. Alternatively, the PPA business operator and the electric power retail business operator may be an identical business operator.

Note that the electrical water heater 20 may be owned by the PPA business operator. When the PPA business operator owns the electrical water heater 20, use of the electrical water heater 20 by the user of the facility 5 is permitted based on the contract with the user of the facility 5 by the PPA service.

### (2.1) Sensor

The sensor 50 detects electric power output from the interconnection device 40.

### (2.2) Power Generation System

As shown in FIG. 1, the power generation system 30 includes a photovoltaic power generating facility 31 and a power conditioning system (PCS) 32.

The photovoltaic power generating facility 31 generates electrical energy by using sunlight as an energy source.

The PCS 32 includes a converter and an inverter. The converter is disposed in a pathway connecting the inverter to the photovoltaic power generating facility 31. The converter has a function as a DC/DC converter. The converter outputs, to the inverter, electrical energy (electric power) output from the photovoltaic power generating facility 31 via the DC/DC converter. The inverter is electrically connected to the interconnection device 40. The inverter is connected to the converter. The inverter converts direct-current power into alternating-current power and outputs the alternating-current power to the interconnection device 40.

The PCS 32 measures the value of electric power to be delivered to the interconnection device 40 (a first electric power value) and outputs a measurement result to the control device 10. Moreover, the PCS 32 acquires, from the sensor 50, the value of the electric power detected by the sensor 50 as the value of electric power to be delivered from the interconnection device 40 to the grid power system 7 (second electric power value). The PCS 32 outputs the second electric power value thus acquired to the control device 10.

### (2.3) Measuring Device

The measuring device 60 is, for example, a smart meter. The measuring device 60 measures the amount of electric energy delivered from the grid power system 7 of the grid power system 7. That is, the measuring device 60 measures the value of the electric power received by the facility 5 from the grid power system 7 (received electric power value). The measuring device 60 outputs the received electric power value thus measured to the control device 10.

### (2.4) Interconnection Device

The interconnection device 40 switches an output destination of the electric power received from the PCS 32. Specifically, the interconnection device 40 switches the output destination of the electric power received from the PCS 32 to the distribution board 70 or the grid power system 7. That is, the interconnection device 40 outputs the electric power received from the PCS 32 to the distribution board 70 or the grid power system 7. Moreover, the interconnection device 40 outputs the electric power received from the grid power system 7 to the distribution board 70 and the control device 10.

### (2.5) Distribution Board

The distribution board 70 includes a main breaker electrically connected to the interconnection device 40 and a plurality of branch breakers electrically connected to a secondary side of the main breaker. Each of the normal load 80 and the electrical water heater 20 is electrically connected to a corresponding one branch breaker of the plurality of branch breakers. The distribution board 70 outputs, via the branch breakers electrically connected to the normal load 80 and the electrical water heater 20, the electric power received from the interconnection device 40.

### (2.6) Normal Load and Electrical Water Heater

The normal load 80 is an electric appliance such as an illumination apparatus or an air conditioning apparatus as described above. The normal load 80 operates with electric power supplied from the distribution board 70.

The electrical water heater 20 heats water by using the electric power supplied from the distribution board 70. For example, the electrical water heater 20 heats water by a heat pump method. The electrical water heater 20 reserves heated water (warm water) in a water storage tank.

The electrical water heater 20 is controlled by the control device 10 in terms of a time period during which the electrical water heater 20 operates (operation period). That is, the electrical water heater 20 is configured such that the operation period thereof is changed by the control device 10.

### (2.7) Control Device

As shown in FIG. 2, the control device 10 includes a storage 11, a first communication unit 12, a second communication unit 13, third communication unit 14, a fourth communication unit 15, and a controller 16.

The control device 10 includes, for example, a computer system including one or more processors and memory. Then, the processor(s) executes a program stored in the memory, and thereby, the computer system functions as the controller 16. The program executed by the processor(s) is stored in the memory of the computer system in advance in this embodiment but may be provided as a non-transitory recording medium, such as a memory card, storing the program or may be provided over a telecommunications network such as the Internet.

The storage 11 includes a device selected from, for example, read only memory (ROM), random access memory (RAM), and electrically erasable programmable read only memory (EEPROM).

The storage 11 stores, in a time series manner, values of electric power thus measured. Specifically, the storage 11 stores, in a time series manner, first electric power values measured by the PCS 32. The storage 11 stores, in a time series manner, second electric power values acquired by the PCS 32 from the sensor 50. Moreover, the storage 11 stores, in a time series manner, received electric power values measured by the measuring device 60. At this time, the storage 11 stores each of the power values in association with weather information on weather on a day on which the each of the power values in a region including the facility 5 has been measured. The weather information is information output from an information provision device 700 shown in FIG. 1.

Further, the storage 11 stores the operation period of the electrical water heater 20. Furthermore, the storage 11 stores information relating to an electric power procurement cost and information relating to an electric power consignation cost. The electric power procurement cost is a cost generated when the electric power retail business operator procures electric power, and the electric power procurement cost differs depending on time zones. When providing the electric power to the facility 5, the electric power retail business operator uses the grid power system 7 which transmits the electric power to the facility 5. The electric power consignation cost is a cost which the electric power retail business operator pays to a system operator who operates the grid power system 7 which the electric power retail business operator uses to transmit the electric power.

The first communication unit 12 includes a communication interface for communication with the electrical water heater 20. The first communication unit 12 is configured to communicate wirelessly or wired with the electrical water heater 20.

The second communication unit 13 includes a communication interface for communication with the PCS 32. The second communication unit 13 is configured to communicate wirelessly or wired with the PCS 32.

The third communication unit 14 includes a communication interface for communication with the measuring device 60. The third communication unit 14 is configured to communicate wirelessly or wired with the measuring device 60.

The fourth communication unit 15 includes a communication interface for communication with the server 3 and the information provision device 700 installed outside the facility 5 via a network NT1 such as the Internet. In this embodiment, the server 3 stores the operation period of the electrical water heater 20 decided on by the control device 10. The server 3 stores the first profit from the sale of the electric power transmitted from the power generation system 30 disposed in the facility 5, the second profit from the sale of the electric power transmitted from the grid power system 7, and the sum of the first profit and the second profit. The information provision device 700 transmits weather forecast information representing a forecast of the weather in the region including the facility 5.

As shown in FIG. 2, the controller 16 includes an acquisition unit 160, a determination unit 161, the decision unit 162, and the load control unit 163.

The acquisition unit 160 acquires the power values from the PCS 32 and the measuring device 60. The acquisition unit 160 acquires the first electric power values via the second communication unit 13 from the PCS 32. The acquisition unit 160 stores, in a time series manner, the first electric power values thus acquired in the storage 11. The acquisition unit 160 acquires the second electric power values via the second communication unit 13 from the PCS 32. The acquisition unit 160 stores, in a time series manner, the second electric power values thus acquired in the storage 11. The acquisition unit 160 acquires the received electric power values via the third communication unit 14 from the measuring device 60. The acquisition unit 160 stores, in a time series manner, the received electric power values thus acquired in the storage 11.

Further, the acquisition unit 160 acquires, via the fourth communication unit 15, weather information on weather in a region including the facility 5 and on a day on which the power values have been measured, from the information provision device 700. The acquisition unit 160 stores the weather information thus acquired in the storage 11. Specifically, the acquisition unit 160 stores, in a time series manner in the storage 11, each of the power values thus acquired from the PCS 32 and the measuring device 60 in association with the weather information on the weather on the day on which the each of the power values in the region including the facility 5 has been measured.

Moreover, the acquisition unit 160 acquires the weather forecast information including a forecast of the weather on a scheduled date of operation of the electrical water heater 20 via the fourth communication unit from the information provision device 700.

The determination unit 161 determines, based on the forecast of the weather in the region including the facility 5 on the scheduled date of operation of the electrical water heater 20, which is the load 6, whether or not power generation by the power generation system 30 is possible on the scheduled date of operation. Specifically, if the weather on the scheduled date of operation included in the weather forecast information acquired by the acquisition unit 160 represents being sunny, the determination unit 161 determines that the power generation by the power generation system 30 is possible on the scheduled date of operation. If the weather on the scheduled date of operation included in the weather forecast information represents weather different from being sunny, the determination unit 161 determines that the power generation by the power generation system 30 is impossible on the scheduled date of operation.

The decision unit 162 decides on the operation period of the electrical water heater 20, which is the load 6. The decision unit 162 decides on an operation period during which the sum of a first profit from a sale of electric power transmitted from a power generation system 30 disposed in the facility 5 and a second profit from a sale of electric power transmitted from a grid power system 7 is maximum. More specifically, the decision unit 162 decides on the operation period on the scheduled date of operation when the determination unit 161 determines that the power generation by the power generation system 30, that is, power generation by the photovoltaic power generating facility 31, on the scheduled date of operation of the electrical water heater 20 (the load 6) is possible.

The first profit is the sum of a first electric power sales value with respect to the amount of electric power delivered from the power generation system 30 and used in the facility 5 and an excessive electric power sales value with respect to the amount of electric power delivered from the power generation system 30 to the grid power system 7. That is, the first electric power sales value and the excessive electric power sales value are sales values with respect to the amount of the electric power output from the photovoltaic power generating facility 31. The second profit is a value obtained by subtracting the electric power procurement cost and the electric power consignation cost when the electric power is delivered from the grid power system 7 from a second electric power sales value with respect to the amount of the electric power delivered from the grid power system 7 and used in the facility 5. The amount of electric power used in the facility 5 is an amount of electric power predicted to be used by the electrical water heater 20 and the normal load 80 on the scheduled date of operation. For example, the first profit and the second profit are each a profit obtainable in one day.

The decision unit 162 causes the operation period of the load 6 (the electrical water heater 20) to be changed at prescribed intervals (e.g., every 60 minutes or 90 minutes) to decide on an operation period during which the sum of the first profit and the second profit obtained during the operation period at every prescribed interval is maximum.

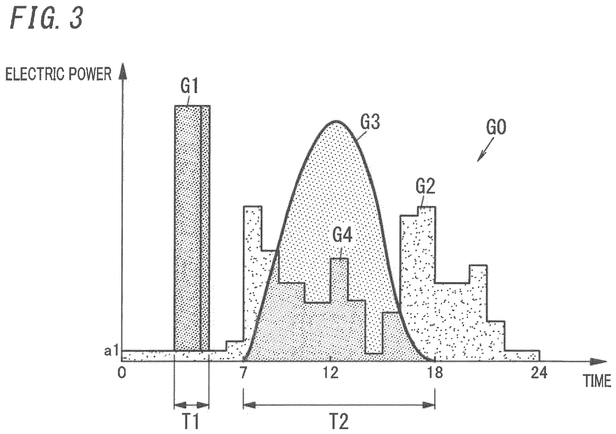

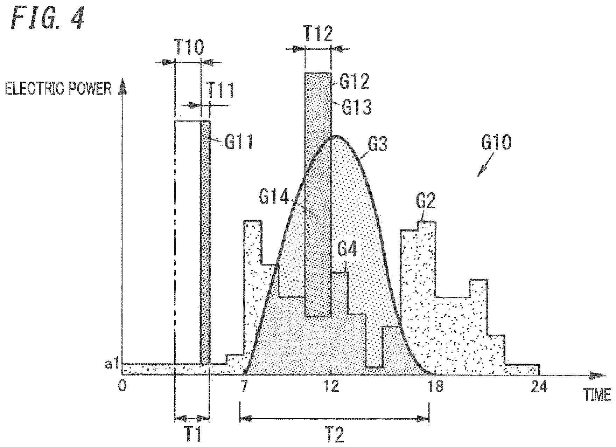

The decision unit 162 causes the time period to be changed during which the electrical water heater 20 is caused to operate, to decide on the operation period during which the sum of the first profit and the second profit is maximum. That is, the sum of the first profit and the second profit depends on the first electric power sales value, the excessive electric power sales value, the second electric power sales value, the electric power procurement cost, and the electric power consignation cost during the time period during which the electrical water heater 20 is caused to operate. Therefore, the decision unit 162 may decide on the operation period such that a profit (a target profit) is greater than a reference profit. The reference profit is a profit obtained during a predetermined period T1 when the load 6 is caused to operate with electric power from the grid power system 7 during the predetermined period T1 (see FIG. 3). That is, the decision unit 162 may decide on another time period T12 (see FIG. 4) as the operation period such that the target profit is greater than the profit obtained during the predetermined period T1 when the load 6 is caused to operate during the predetermined period T1 (see FIG. 3). In this embodiment, the target profit is a profit obtained during the another time period T12 when the load 6 (the electrical water heater 20) is caused to operate with electric power from at least the power generation system 30 out of the power generation system 30 and the grid power system 7 during the another time period T12 as an alternative to a time period T10 which is at least part of the predetermined period T1. Further, the target profit is a profit included in the sum of the first profit and the second profit. In this embodiment, the predetermined period T1 is a time zone at nighttime, and the another time period T12 is a time zone in daytime T2 (see FIGS. 3 and 4). The nighttime is, for example, a time zone from 22:00 to 6:00 next morning. The daytime T2 is, for example, 7:00 to 18:00.

Now, the decision on the operation period will be described with reference to a specific example.

FIG. 3 shows a graph G0 representing the relationship of electric power used in the facility 5 and the electric power generated by the power generation system 30 with respect to time when the electrical water heater 20 is caused to operate with the electric power from the grid power system 7 during the predetermined period (nighttime) T1. Moreover, FIG. 4 shows a graph G10 representing the relationship of the electric power used in the facility 5 and the electric power generated by the power generation system 30 with respect to time when the electrical water heater 20 is caused to operate with the electric power from at least the power generation system 30 out of the power generation system 30 and the grid power system 7 during the another time period T12 as an alternative to a time period T10 which is at least part of the predetermined period T1.

Data G1 shown in FIG. 3 represents electric power used when the electrical water heater 20 operates with the electric power from the grid power system 7 during the predetermined period T1. The area of the data G1 corresponds to the amount of the electric power used during the predetermined period. In the present embodiment, the data G1 is stored in the storage 11 in advance.

Data G2 shown in FIGS. 3 and 4 represents the electric power supplied from the grid power system 7 and used by the normal load 80 disposed in the facility 5. Moreover, a value a1 represents standby power received from the grid power system 7. The standby power is stable electric power during a time period during which the electrical water heater 20 and the normal load 80 are considered not operating.

Data G3 shown in FIGS. 3 and 4 represents the electric power generated by the power generation system 30, that is, by the photovoltaic power generating facility 31 during the daytime T2. The area of the data G3 corresponds to the amount of the electric power.

Moreover, data G4 shown in FIGS. 3 and 4 represents electric power included in the electric power generated by the power generation system 30 and used by the normal load 80 of the facility 5. The area of the data G4 is the amount of the electric power included in the electric power generated by the power generation system 30 and used by the normal load 80 of the facility 5. Electric power included in the electric power generated by the power generation system 30 and not used by the normal load 80 of the facility 5, that is, the difference between the electric power generated by the power generation system 30 and the electric power used by the normal load 80 is the excessive electric power. A result obtained by subtracting the area of the data G4 from the area of the data G3 is the amount of the excessive electric power.

The data G2, G3, and G4 represent, for example, an average of power values in a predetermined number of days (e.g., 10 days) on which the weather was sunny in one month in the past with reference to a date on which the process of deciding on the operation period is executed. If the decision unit 162 decides that the power generation by the photovoltaic power generating facility 31 is possible, the decision unit 162 calculates an average value of the first electric power value, the second electric power value, and the received electric power value in the predetermined number of days (e.g., 10 days) on which the weather was sunny in the one month in the past. The decision unit 162 generates the data G3 from the average value of the first electric power values, the data G4 from a result obtained by subtracting the average value of the second electric power values from the average value of the first electric power values, and the data G2 from the average value of the received electric power values. The decision unit 162 generates the graph G0 by using the data G1 stored in advance and the data G2 to G4 thus generated.

Data G11 shown in FIG. 4 represents electric power used when the electrical water heater 20 operates with the electric power from the grid power system 7 during a remaining time period T11 of the predetermined period T1 except for the time period T10 replaced with the another time period T12. The area of the data G11 corresponds to the amount of electric power used during the remaining time period T11.

Data G12 shown in FIG. 4 represents electric power used when the electrical water heater 20 is caused to operate with electric power from at least the power generation system 30 out of the power generation system 30 and the grid power system 7 during the another time period T12 as an alternative to the time period T10. The area of the data G12 corresponds to the amount of electric power used during the another time period T12.

The data G12 includes data G13 and data G14. The data G13 represents electric power used when the electrical water heater 20 is caused to operate with the electric power from the grid power system 7 during the another time period T12. The data G13 is shown as an area including a value larger than a value of the electric power represented by the data G3 during the another time period T12. The area of the data G13 corresponds to the amount of the electric power used when the electrical water heater 20 operates with the electric power from the grid power system 7 during the another time period T12. The data G14 represents electric power used when the electrical water heater 20 is caused to operate with the electric power from at least the power generation system 30 during the another time period T12. The data G14 is shown as an area including a value smaller than the value of the electric power represented by the data G3 during the another time period T12. The area of the data G14 corresponds to the amount of the electric power used when the electrical water heater 20 operates with the electric power from the power generation system 30 during the another time period T12.

The decision unit 162 acquires the amount of electric power when the electrical water heater 20 is caused to operate during the predetermined period T1. That is, the decision unit 162 acquires the amount of electric power according to the data G1. The decision unit 162 acquires the electric power procurement cost and the electric power consignation cost during the predetermined period T1 from the storage 11 and calculates a reference profit which is a result obtained by subtracting the electric power procurement cost and the electric power consignation cost thus acquired from the second sales value with respect to the amount of the electric power according to the data G1.

The decision unit 162 assigns, to part of the daytime T2, the another time period T12 as an alternative to a time period T10 which is at least part of the predetermined period T1. The decision unit 162 calculates a profit during the time period (the another time period T12) thus assigned. For example, during the another time period T12 shown in FIG. 4, the electrical water heater 20 operates with both the electric power from the power generation system 30 and the electric power from the grid power system 7. The decision unit 162 calculates a profit (a first target profit) from the sale of the electric power transmitted from the power generation system 30 during the another time period T12. The decision unit 162 calculates, as a second target profit, the sum of a profit from the sale of the electric power transmitted from the grid power system 7 during the remaining time period T11 and a profit from the sale of the electric power transmitted from the grid power system 7 during the another time period T12.

The decision unit 162 calculates a total value of the first target profit and the second target profit. More specifically, the decision unit 162 calculates, as the first target profit, the sum of the first electric power sales value with respect to the amount of electric power delivered from the power generation system 30 and used by the electrical water heater 20 and the excessive electric power sales value with respect to the amount of electric power delivered from the power generation system 30 to the grid power system during the another time period T12. The decision unit 162 calculates a value obtained by subtracting the electric power procurement cost and the electric power consignation cost during the another time period T12 from the second electric power sales value with respect to the amount of electric power delivered from the grid power system 7 and used by the electrical water heater 20 during each of the remaining time period T11 and the another time period T12. The decision unit 162 calculates, as the second target profit, the sum of the values calculated in each of the remaining time period T11 and the another time period T12. The decision unit 162 calculates the total value of the first target profit and the second target profit thus calculated. In this embodiment, when the load 6 (the electrical water heater 20) is caused to operate during the predetermined period T1, a profit from a sale of the excessive electric power can be obtained during the another time period T12. However, causing the load 6 (the electrical water heater 20) to operate during the another time period T12 replaces the profit from the sale of the excessive electric power with the first target profit. Therefore, the decision unit 162 subtracts the profit from selling the excessive electric power from the total value of the first target profit and the second target profit, thereby obtaining a final profit (the target profit) during the another time period T12. While changing, of the daytime T2, a time period which is to be assigned to the another time period T12 (assignment time period), the decision unit 162 calculates the target profit for each of a plurality of assignment time periods.

The decision unit 162 decides on the another time period T12 corresponding to a target profit which is included in respective target profits calculated for the plurality of assignment time periods and which is greater than the reference profit as the operation period. If there are a plurality of target profits greater than the reference profit, the decision unit 162 decides on the another time period T12 corresponding to a target profit which differs most from the reference profit as the operation period. At this time, the decision unit 162 also decides on the remaining time period T11 as the operation period. As described above, the sum of the first profit and the second profit depends on the first electric power sales value, the excessive electric power sales value, the second electric power sales value, the electric power procurement cost, and the electric power consignation cost during the time period during which the electrical water heater 20 is caused to operate. Therefore, a profit that can be obtained by causing the electrical water heater 20 to operate is maximized, thereby making the sum of the first profit and the second profit maximum.

The decision unit 162 stores, as schedule information, information including the operation period thus decided and the scheduled date of operation in the storage 11. In this embodiment, the decision unit 162 decides on the another time period T12 and the remaining time period T11 as the operation period and stores schedule information including the operation period and the scheduled date of operation in the storage 11.

The load control unit 163 controls the electrical water heater 20, which is the load 6, disposed in the facility 5 through communication via the first communication unit 12. The load control unit 163 controls the electrical water heater 20, which is the load 6, such that the electrical water heater 20 operates during the operation period decided on by the decision unit 162.

Specifically, the load control unit 163 determines, at a predetermined time (e.g., 00:00), whether or not schedule information including a scheduled date of operation the same as the current date has been stored in the storage 11. If the load control unit 163 determines that the schedule information including the scheduled date of operation the same as the current date has been stored in the storage 11, the load control unit 163 acquires the schedule information including the scheduled date of operation. The load control unit 163 starts controlling the electrical water heater 20 on the basis of the operation period included in the schedule information thus acquired. The load control unit 163 causes the electrical water heater 20 to operate at a start time (e.g., a start time of the remaining time period T11, a start time of the another time period T12) of the operation period. The load control unit 163 causes the electrical water heater 20 to stop at an end time (e.g., an end time of the remaining time period T11, an end time of the another time period T12) of the operation period. At this time, when the electric power from the power generation system 30 is used, the interconnection device 40 outputs, to the distribution board 70, the electric power transmitted from the PCS 32. When the electric power from the grid power system 7 is used, the interconnection device 40 outputs, to the distribution board 70, the electric power transmitted from the grid power system 7.

If the load control unit 163 determines that the schedule information including the scheduled date of operation the same as the current date is not stored in the storage 11, the load control unit 163 controls the electrical water heater 20 such that the electrical water heater 20 operates at nighttime, for example, during the predetermined period T1 shown in FIG. 3.

### (3) Operation

### (3.1) Decision Process

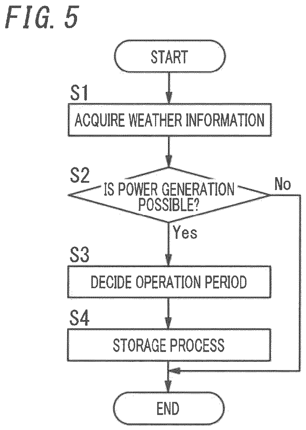

Now, steps in a decision process in which the control device 10 decides on the operation period of the electrical water heater 20 will be described with reference to FIG. 5.

The acquisition unit 160 acquires the weather forecast information including a forecast of the weather on a scheduled date of operation of the electrical water heater 20 from the information provision device 700 (step S1).

The determination unit 161 determines whether or not power generation by the power generation system 30 is possible on the scheduled date of operation (step S2). If the weather on the scheduled date of operation included in the weather forecast information acquired by the acquisition unit 160 represents weather different from being sunny, the determination unit 161 determines that the power generation by the power generation system 30 is impossible on the scheduled date of operation. If the weather on the scheduled date of operation included in the weather forecast information acquired by the acquisition unit 160 represents being sunny, the determination unit 161 determines that the power generation by the power generation system 30 is possible on the scheduled date of operation.

If the determination unit 161 determines that the power generation by the power generation system 30 is impossible on the scheduled date of operation ("No" in step S2), the process ends.

If the determination unit 161 determines that the power generation by the power generation system 30 is possible on the scheduled date of operation ("Yes" in step S2), the decision unit 162 decides on the operation period of the electrical water heater 20 on the scheduled date of operation (step S3). The decision unit 162 decides on an operation period during which the sum of the first profit from the sale of the electric power transmitted from the power generation system 30 and the second profit from the sale of the electric power transmitted from the grid power system 7 is maximum.

The decision unit 162 performs a storage process of storing the operation period decided in step S3 (step S4). Specifically, the decision unit 162 stores, as schedule information, information including the operation period thus decided and the scheduled date of operation in the storage 11. As an example, the decision unit 162 decides on the another time period T12 and the remaining time period T11 as the operation period and stores schedule information including the operation period and the scheduled date of operation in the storage 11.

### (3.2) Control Process

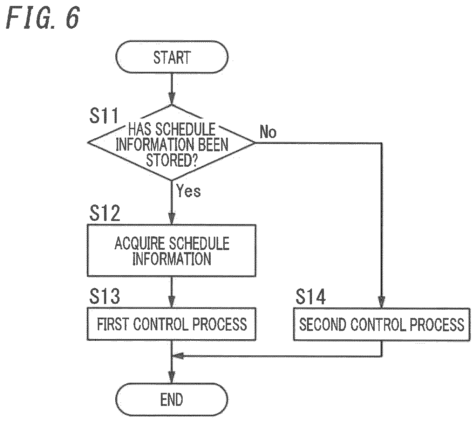

Now, steps in a control process which the control device 10 performs on the electrical water heater 20 will be described with reference to FIG. 6.

The load control unit 163 determines, at a predetermined time (e.g., 00:00), whether or not schedule information including a scheduled date of operation the same as the current date has been stored in the storage 11 (step S11).

If the load control unit 163 determines that the schedule information including the scheduled date of operation the same as the current date has been stored in the storage 11 ("Yes" in step S11), the load control unit 163 acquires the schedule information including the scheduled date of operation (step S12).

The load control unit 163 performs a first control process on the basis of the schedule information thus acquired (step S13). The load control unit 163 starts controlling the electrical water heater 20 on the basis of the operation period included in the schedule information thus acquired. The load control unit 163 causes the electrical water heater 20 to operate at a start time (e.g., a start time of the remaining time period T11, a start time of the another time period T12) of the operation period. The load control unit 163 causes the electrical water heater 20 to stop at an end time (e.g., an end time of the remaining time period T11, an end time of the another time period T12) of the operation period.

If the load control unit 163 determines that the schedule information including the scheduled date of operation the same as the current date is not stored in the storage 11 ("No" in step S11), the load control unit 163 performs a second control process (step S14). The load control unit 163 controls the electrical water heater 20 such that the electrical water heater 20 operates at nighttime, for example, during the predetermined period T1 shown in FIG. 3.

### (4) Advantages

As described above, the control system 1 (the control device 10) of the embodiment includes the load control unit 163 and the decision unit 162. The load control unit 163 controls the load 6 (e.g., the electrical water heater 20) disposed in the facility 5. The decision unit 162 decides on an operation period of the load 6. The decision unit 162 decides on an operation period during which the sum of a first profit from a sale of electric power transmitted from the power generation system 30 disposed in the facility 5 and a second profit from a sale of electric power transmitted from the grid power system 7 is maximum. The load control unit 163 controls the load 6 such that the load 6 operates during the operation period decided on by the decision unit 162.

With this configuration, the control system 1 controls the load 6 (the electrical water heater 20) such that the load 6 operates during the operation period, during which the sum of the first profit and the second profit is maximum. That is, controlling the load 6 enables an increased profit to be obtained by the sale of the electric power via the power generation system 30 and the sale of the electric power via the grid power system 7. More specifically, while a user of the facility 5 is allowed to use the electric power of the power generation system 30, an increased profit is obtainable from the sale of the electric power via the power generation system 30 and the sale of the electric power via the grid power system 7.

### (5) Variations

Variations will be enumerated below. Note that the variations described below are applicable accordingly in combination with the embodiment described above.

### (5.1) First Variation

Decision on the operation period of the electrical water heater 20 may be made by the server 3. In this case, the control system 1 has a configuration including the control device 10 and the server 3.

Moreover, the decision on the operation period of the electrical water heater 20 and control of the electrical water heater 20 during the operation period thus decided may be performed by the server 3. At this time, the control device 10 functions as a relay. That is, the server 3 controls the electrical water heater 20 via the control device 10. When the decision on the operation period and the control of the electrical water heater 20 during the operation period are performed by the server 3, the control system 1 has a configuration including at least the server 3 out of the control device 10 and the server 3.

### (5.2) Second Variation

The control device 10 may transmit respective power values acquired from the PCS 32 and the measuring device 60 to the server 3 via the network NT1. The server 3 notifies, based on the power values received from the control device 10, a user of the facility 5 of a price which the user should pay. Alternatively, the server 3 notifies the user of information which is based on the power values received from the control device 10 and which is on the amount of electric power used in the facility 5 (e.g., information representing a change in the amount of electric power used in one day).

Alternatively, the server 3 may transmit the power values received from the control device 10 to another server. The another server may calculate, based on the power values received from the server 3, a price which the user should pay, and the another server may notify the user of the facility 5 of the price. Still alternatively, the server 3 may notify the user of information which is based on the power values received from the server 3 and which is on the amount of electric power used in the facility 5 (e.g., information representing a change in the amount of electric power used in one day). In this variation, the another server may be, for example, a server of the PPA business operator or a server of the electric power retail business operator. Alternatively, the another server may be a server of another business operator of a business group to which the PPA business operator and the electric power retail business operator belong.

### (5.3) Third Variation

As an example of the power generation system 30, the photovoltaic power generating facility 31 has been described. However, the power generation system 30 is not limited to the configuration including the photovoltaic power generating facility 31.

The power generation system 30 may include a hydraulic power generating facility or may include a wind-force power generating facility.

Alternatively, the power generation system 30 may have a configuration including two or more facilities of the photovoltaic power generating facility 31, the hydraulic power generating facility, and the wind-force power generating facility. That is, the power generation system 30 may have a configuration including at least one facility of the photovoltaic power generating facility 31, the hydraulic power generating facility, or the wind-force power generating facility.

### (5.4) Fourth Variation

The predetermined period T1 is not limited to being at nighttime. The predetermined period T1 may be in the daytime.

Moreover, when the power generation system 30 includes at least one of the hydraulic power generating facility or the wind-force power generating facility, the another time period T12 may be at nighttime.

### (5.5) Fifth Variation

As an example of the load 6 controlled during the operation period decided on by the control system 1, the electrical water heater 20 has been described. However, the load 6 controlled during the operation period decided on by the control system 1 is not limited to the electrical water heater 20. The load 6 controlled during the operation period decided on by the control system 1 may be, for example, an electric storage device or may be an electric vehicle (EV).

### (Other Variations)

The embodiment described above is a mere example of various embodiments of the present disclosure. Various modifications may be made to the embodiment described above depending on design or the like as long as the object of the present disclosure is achieved.

Moreover, a function similar to the control system 1 may also be implemented as a control method, a computer program, or a non-transitory storage medium that stores the program. The control method according to an aspect includes a load control step and a decision step. The load control step includes controlling the load 6 (e.g., the electrical water heater 20) disposed in the facility 5. The decision step includes deciding on an operation period of the load 6. The decision step includes deciding on an operation period during which the sum of a first profit from a sale of electric power transmitted from a power generation system 30 disposed in the facility 5 and a second profit from a sale of electric power transmitted from a grid power system 7 is maximum. The load control step includes controlling the load 6 such that the load 6 operates during the operation period decided in the decision step. The program according to an aspect is a program for causing a computer system to execute the control method described above.

The control system 1 in the present disclosure includes a computer system. The computer system includes, as principal hardware components, a processor and memory. The functions of the control system 1 of the present disclosure may be implemented by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be integrated together in a single device or distributed in multiple devices without limitation. As mentioned herein, the computer system includes a microcontroller including one or more processors and one or more memory components. Thus, the microcontroller is also composed of one or more electronic circuits including a semiconductor integrated circuit or a large-scale integrated circuit.

Moreover, collecting the plurality of functions of the control system 1 of the MEMS sensor 1 in one housing is not an essential configuration of the control system 1. The components of the control system 1 may be distributed in a plurality of housings. Alternatively, at least some functions of the control system 1 may be implemented as a cloud computing system as well.

### (Summary)

As described above, a control system (1) of a first aspect includes a load control unit (163) and a decision unit (162). The load control unit (163) is configured to control a load (6) (e.g., an electrical water heater 20) disposed in a facility (5). The decision unit (162) is configured to decide on an operation period of the load (6). The decision unit (162) is configured to decide on the operation period during which a sum of a first profit from a sale of electric power transmitted from a power generation system (30) disposed in the facility (5) and a second profit from a sale of electric power transmitted from a grid power system (7) is maximum. The load control unit (163) is configured to control the load (6) such that the load (6) operates during the operation period decided on by the decision unit (162).

With this aspect, the control system (1) controls the load (6) during the operation period, during which the sum of the first profit and the second profit is maximum. That is, controlling the load (6) enables an increased profit to be obtained by the sale of the electric power via the power generation system (30) and the sale of the electric power via the grid power system (7). More specifically, while a user of the facility (5) is allowed to use the electric power of the power generation system (30), an increased profit is obtainable from the sale of the electric power via the power generation system (30) and the sale of the electric power via the grid power system (7).

In a control system (1) of a second aspect referring to the first aspect, the first profit is a sum of a first electric power sales value with respect to an amount of electric power delivered from the power generation system (30) and used in the facility (5) and an excessive electric power sales value with respect to an amount of electric power delivered from the power generation system (30) to the grid power system (7). The second profit is a value obtained by subtracting an electric power procurement cost and an electric power consignation cost when electric power is delivered from the grid power system (7) from a second electric power sales value with respect to an amount of electric power delivered from the grid power system (7) and used in the facility (5).

With this aspect, controlling the load (6) enables an increased profit to be obtained by the sale of the electric power via the power generation system (30) and the sale of the electric power via the grid power system (7).

In a control system (1) of the third aspect referring to the second aspect, the power generation system (30) includes a photovoltaic power generating facility (31). The first electric power sales value and the excessive electric power sales value are sales values with respect to an amount of electric power output from the photovoltaic power generating facility (31).

With this aspect, a profit is obtainable based on electric power by photovoltaic power generation.

A control system (1) of a fourth aspect referring to any one of the first to third aspects further includes a determination unit (161). The determination unit (161) is configured to determine, based on a forecast of weather in a region including the facility (5) on a scheduled date of operation of the load (6), whether or not power generation by the power generation system (30) is possible on the scheduled date of operation. The decision unit (162) is configured to, when the determination unit (161) determines that the power generation by the power generation system (30) is possible on the scheduled date of operation, decide on an operation period on the scheduled date of operation.

This aspect enables the operation period on the scheduled date of operation to be decided in accordance with whether or not the power generation is possible on the scheduled date of operation of the load (6).

In a control system (1) of a fifth aspect referring to any one of the first to fourth aspects, the decision unit (162) is configured to decide on another time period (T12) as the operation period such that a profit (a target profit) is greater than a reference profit. The reference profit is a profit obtained during a predetermined period (T1) when the load (6) is caused to operate with the electric power from the grid power system (7) during the predetermined period (T1). The target profit is a profit obtained during the another time period (T12) and included in the sum of the first profit and the second profit when the load (6) is caused to operate with the electric power from at least the power generation system (30) out of the power generation system (30) and the grid power system (7) during the another time period (T12) as an alternative to a time period (T10) which is at least part of the predetermined period (T1).

This aspect enables a maximum value of the sum of the first profit and the second profit to be obtained based on the reference profit.

In a control system (1) of a sixth aspect referring to the fifth aspect, the predetermined period (T1) is at nighttime, and the another time period (T12) is a time zone in daytime.

With this aspect, while the load (6) is caused to operate in a time zone in daytime, an increased profit is obtainable from the sale of the electric power via the power generation system (30) and the sale of the electric power via the grid power system (7).

In a control system (1) of a seventh aspect referring to any one of the first to sixth aspects, the load (6) is an electrical water heater (20).

With this aspect, controlling such that the electrical water heater (20) operates during the operation period enables an increased profit to be obtained by the sale of the electric power via the power generation system (30) and the sale of the electric power via the grid power system (7).

A control method of an eighth aspect includes a load control step and a decision step. The load control step includes controlling a load (6) (e.g., an electrical water heater 20) disposed in a facility (5). The decision step includes deciding on an operation period of the load (6). The decision step includes deciding on an operation period during which a sum of a first profit from a sale of electric power transmitted from a power generation system (30) disposed in the facility (5) and a second profit from a sale of electric power transmitted from the grid power system (7) is maximum. The load control step includes controlling the load (6) such that the load (6) operates during the operation period decided in the decision step.

This aspect enables an increased profit to be obtained by the sale of the electric power via the power generation system (30) and the sale of the electric power via the grid power system (7).

A program of a ninth aspect is a program for causing a computer system to execute the control method of the eighth aspect.

This aspect enables an increased profit to be obtained by the sale of the electric power via the power generation system (30) and the sale of the electric power via the grid power system (7).

An interconnection system (2) of a tenth aspect includes: the control system (1) of any one of the first to seventh aspects; and a power generation system (30).

This aspect enables an increased profit to be obtained by the sale of the electric power via the power generation system (30) and the sale of the electric power via the grid power system (7).

### Reference Signs List

- 1: Control System
- 2: Interconnection System
- 6: Load
- 7: Grid Power System
- 10: Control Device
- 20: Electrical Water Heater
- 30: Power Generation System
- 31: Photovoltaic Power Generating Facility
- 161: Determination Unit
- 162: Decision Unit
- 163: Load Control Unit
- T1: Predetermined Period
- T12: Another Time Period

## Claims

1. A control system comprising:
a load control unit configured to control a load disposed in a facility; and
a decision unit configured to decide on an operation period of the load,
the decision unit being configured to decide on the operation period during which a sum of a first profit from a sale of electric power transmitted from a power generation system disposed in the facility and a second profit from a sale of electric power transmitted from a grid power system is maximum,
the load control unit being configured to control the load such that the load operates during the operation period decided on by the decision unit.

2. The control system of claim 1, wherein
the first profit is a sum of a first electric power sales value with respect to an amount of electric power delivered from the power generation system and used in the facility and an excessive electric power sales value with respect to an amount of electric power delivered from the power generation system to the grid power system, and
the second profit is a value obtained by subtracting an electric power procurement cost and an electric power consignation cost when electric power is delivered from the grid power system from a second electric power sales value with respect to an amount of electric power delivered from the grid power system and used in the facility.

3. The control system of claim 2, wherein
the power generation system includes a photovoltaic power generating facility, and
the first electric power sales value and the excessive electric power sales value are sales values with respect to an amount of electric power output from the photovoltaic power generating facility.

4. The control system of any one of claims 1 to 3, further comprising a determination unit configured to determine, based on a forecast of weather in a region including the facility on a scheduled date of operation of the load, whether or not power generation by the power generation system is possible on the scheduled date of operation, wherein
the decision unit is configured to, when the determination unit determines that the power generation by the power generation system is possible on the scheduled date of operation, decide on an operation period on the scheduled date of operation.

5. The control system of any one of claims 1 to 4, wherein
the decision unit is configured to decide on another time period as the operation period such that a profit is greater than a reference profit, the reference profit being obtained during a predetermined period when the load is caused to operate with the electric power from the grid power system during the predetermined period, the profit being obtained during the another time period and included in the sum of the first profit and the second profit when the load is caused to operate with the electric power from at least the power generation system out of the power generation system and the grid power system during the another time period as an alternative to a time period which is at least part of the predetermined period.

6. The control system of claim 5, wherein
the predetermined period is at nighttime, and
the another time period is a time zone in daytime.

7. The control system of any one of claims 1 to 6, wherein
the load is an electrical water heater.

8. A control method comprising:
a load control step of controlling a load disposed in a facility; and
a decision step of deciding on an operation period of the load,
the decision step including deciding on the operation period during which a sum of a first profit from a sale of electric power transmitted from a power generation system disposed in the facility and a second profit from a sale of electric power transmitted from a grid power system is maximum,
the load control step including controlling the load such that the load operates during the operation period decided in the decision step.

9. A program for causing a computer system to execute the control method of claim 8.

10. An interconnection system comprising:
a control system of any one of claims 1 to 7; and
the power generation system.
